# EUROPEAN PATENT SPECIFICATION

(11) **EP 1 481 526 B1**
(45) Date of publication and mention of the grant of the patent: **21.11.2007**
(21) Application number: 03718725.9
(22) Date of filing: 27.01.2003
(51) Int. Cl.: H04L 29/06, G06Q 30/00

(54) **MOBILE TERMINAL AND PROVIDERS FOR FILLING IN ELECTRONIC FORMS**
MOBILENDGERÄT UND ANBIETERN ZUR AUSFÜLLUNG VON ELEKTRONISCHEN FORMULAREN
TERMINAL MOBILE ET FOURNISSEURS DE REMPLISSAGE DE FORMULAIRES ELECTRONIQUES

(30) Priority: 30.01.2002 EP 02075362
(43) Date of publication of application: 01.12.2004
(73) Proprietor: Koninklijke KPN N.V., 9726 AE Groningen (NL)
(72) Inventor: ZOM, Pablo, NL-3014 DC Rotterdam (NL); VAN HULTEN, Christian, Cornelis, Maria, NL-2628 AW Delft (NL)
(74) Representative: Wuyts, Koenraad Maria
(86) International application number: PCT/EP2003/003456
(87) International publication number: WO 2003/065678

(56) References cited:
- EP-A- 1 168 264
- WO-A-00/70838
- WO-A-01/46873

## Description

The invention relates to a telecommunication system for mobile telecommunication and comprising mobile terminals and providers, with at least one provider being a form provider for providing a form which at least partly needs to be filled in with data, which form provider comprises a transmitting module for transmitting a form signal to at least one mobile terminal, which mobile terminal comprises a receiver for receiving said form signal, wherein said telecommunication system comprises a data provider for providing data.

The invention further relates to a data provider for use in a telecommunication system for mobile telecommunication and comprising mobile terminals and providers, with at least one provider being a form provider for providing a form which at least partly needs to be filled in with data, to a method for use in a telecommunication system for mobile telecommunication and comprising mobile terminals and providers, with at least one provider being a form provider for providing a form which at least partly needs to be filled in with data, which form provider comprises a transmitting module for transmitting a form signal to at least one mobile terminal, which mobile terminal comprises a receiver for receiving said form signal, wherein said telecommunication system comprises a data provider for providing data, and to a processor program product to be run via a data provider's server for use in a telecommunication system for mobile telecommunication and comprising mobile terminals and providers, with at least one provider being a form provider for providing a form which at least partly needs to be filled in with data.

Such a telecommunication system is generally known like for example a mobile telecommunication system in which mobile terminals communicate with service providers via access providers, which access providers for example either comprise or use network-units like for example base stations, switches, routers, bridges, servers etc.

Said form provider is generally known and for example visited by a mobile user using a mobile terminal, like for example a WAP phone based upon WML or an i-Mode phone based upon cHTML, via for example a WAP Internet connection or an i-mode Internet connection. In case of said user being interested in getting information from this form provider or another party or in doing business with this form provider or another party, the form provider sends a form to the mobile terminal. This form for example comprises fields like first name, last name, address, postal code, city, telephone number, email address, birthday, credit card number, expiration date, etc. and needs to be filled in with data, either by said user by hand, or automatically at a proxy as disclosed in EP 1 168 264.

EP 1 168 264 discloses a proxy situated between a wireless device and a merchant server. The merchant server provides the form, which is filled up at the proxy, which sends the filled-in form to the wireless device for final submission.

The known telecommunication system is disadvantageous, inter alia, due to being relatively inefficient.

It is an object of the invention, inter alia, of providing a telecommunication system according to the invention which is relatively efficient.

The telecommunication system according to the invention is characterized in that the data provider comprises a receiving module for receiving a request signal from said mobile terminal and a transmitting module for in response to said request signal transmitting a data signal directly to said form provider, the data signal comprising data to be filled in into the form, which mobile terminal comprises a transmitter for transmitting said request signal.

By providing the telecommunication system according to the invention with for example a data provider for providing data upon a user's request to the form provider or another party, the user no longer needs to enter said data him/herself. The form signal may for example be a signal representing (parts of) the form or may for example be a signal defining a standardised form. By transmitting the data signal directly to the form provider, the filled-in form is no longer sent to the mobile terminal for final submission. Compared to indirectly transmitting the data signal to the form provider via the mobile terminal, the direct transmission to the form provider is more efficient.

The invention is based on the insight, inter alia, that the final submission at the mobile terminal can be avoided, and is based upon the basic idea, inter alia, that the data signal should be transmitted directly to the form provider.

The invention solves the problem, inter alia, of providing a telecommunication system which is relatively efficient.

An embodiment of the telecommunication system according to the invention is advantageous in that said form provider is a service provider and said data provider is an access provider.

This for example allows the access provider to be more efficiently, due to access providers usually already possessing at least some of their mobile users' personal data.

An embodiment of the telecommunication system according to the invention is advantageous in that said data signal stored in an access provider's server is adaptable in response to a user action.

Now said user has for example the option to adapt his/her personal data stored in the access provider's server, for example via using a fixed terminal or a mobile terminal and visiting the access provider's web site, or sending a letter, a fax, an email, making a telephone call etc.

Embodiments of the data provider according to the invention, of the method according to the invention, and of the processor program product according to the invention to be run via a data provider's server are in correspondence with embodiments of the telecommunication system according to the invention.

These and other aspects of the invention will be apparent from and elucidated with reference to the embodiments(s) described hereinafter.
Figure 1 discloses a telecommunication system according to the invention comprising a data provider according to the invention and a mobile terminal according to the invention, and
figure 2 discloses a block diagram illustrating a method according to the invention and a processor program product according to the invention.

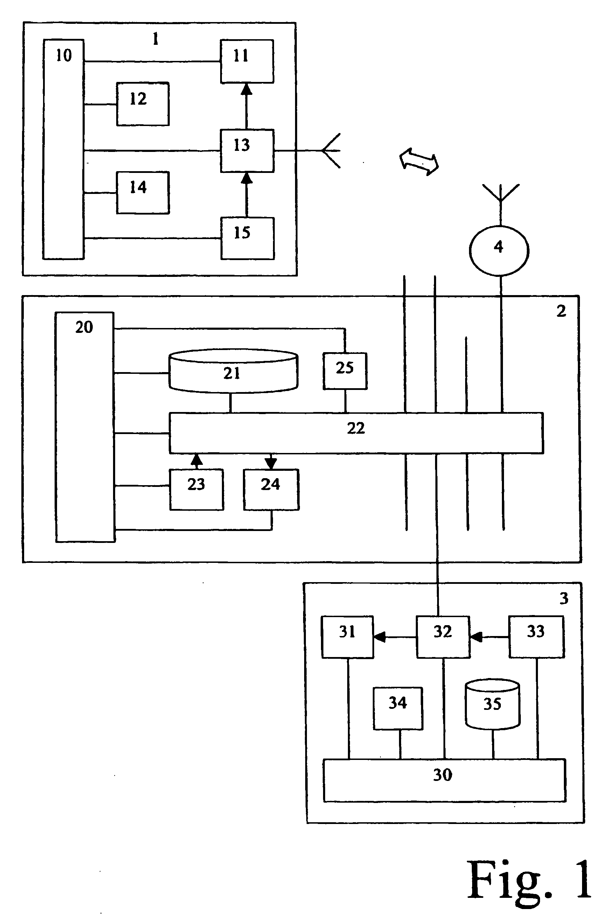

Figure 1 discloses a mobile terminal 1 according to the invention comprising a processor 10 coupled to (more general: communicating with) a receiver 11, to (with) a memory 12, to (with) an interface 13, to (with) a man-machine-interface (mmi) 14 and to (with) a transmitter 15. An input of receiver 11 is coupled to (more general: communicates with) an output of interface 13, of which an input is coupled to (more general: communicates with) an output of transmitter 15. An in/output of interface 13 is coupled to (more general: communicates with) an antenna for mobile telecommunication with an access provider 2 via a base station 4.

Access provider 2 comprises a processor 20 coupled to (more general: communicating with) a server 21, to (with) a switch 22, to (with) a transmitting module 23, to (with) a receiving module 24 and to (with) an adjusting module 25. Switch 22 is externally coupled to (more general: communicates with) base station 4 and to (with) service provider 3, and is internally coupled to (more general: communicates with) server 21, to (with) an output of transmitting module 23, to (with) an input of receiving module 24 and to (with) adjusting module 25.

Service provider 3 comprises a processor 30 coupled to (more general: communicating with) a receiving module 31, to (with) a module 34, to (with) an interface 32, to (with) a server 35 and to (with) a transmitting module 33. An input of receiving module 31 is coupled to (more general: communicates with) an output of interface 32, of which an input is coupled to (more general: communicates with) an output of transmitting module 33. An in/output of interface 32 is coupled to (more general: communicates with) switch 22.

A user using mobile terminal 1 is for example surfing the web and visiting service provider 3 via access provider 2 and base station 4. The mobile terminal 1 is for example a WAP phone based upon WML or an i-Mode phone based upon cHTML and using for example a WAP Internet connection or an i-mode Internet connection. In case of said user being interested in getting information from this service provider 3, like for example personalized information or information which is to be sent to this user's email address or home address, or in doing business with this service provider 3, the service provider 3 sends an electronic form to the mobile terminal 1, for example by sending a form signal from transmitting module 33 via interface 32 and switch 22 and base station 4, which form signal arrives via interface 13 and receiver 11 at mobile terminal 1, where said form signal is displayed via mmi 14. This form for example comprises fields like first name, last name, address, postal code, city, telephone number, email address, birthday, credit card number, expiration date, etc. and needs to be filled in by said user with data, which according to prior art used to be done by entering data via the keys of mmi 14 of the mobile terminal 1. This was an inconvenient procedure.

According to the invention, electronic forms are dealt with in a much more convenient way. Thereto, the telecommunication system comprises a data provider for providing the data automatically upon the user's request. Via mmi 14, said user (for example by using one or more keys) generates a request signal, which via processor 10 and transmitter 15 and interface 13 and base station 4 and switch 22 is sent to receiving module 24. Processor 20 is informed and controls transmitting module 23 in such a way that a data signal is transmitted.

According to a first possibility, as claimed in the present invention, this data signal is transmitted directly to receiving module 31 of service provider 3, via switch 22 and interface 32, where this data signal for example is stored in server 35 under control of processor 30.

According to a second possibility, although not claimed in the present invention this data signal is transmitted to receiver 11 of mobile terminal 1, via switch 22 and base station 4 and interface 13, where this data signal for example is temporarily stored in memory 12 and displayed via mmi 14, under control of processor 10. Now said user has the option of checking this data, and of possibly amending it, which is very advantageous.

Then, in response to a user action (for example by using one or more keys), a further data signal is transmitted directly from transmitter 15 via interface 13 and base station 4 and switch 22 to said service provider 3. In case of said user having amended the data, said further data signal will be different from said data signal, and in case of said user just having checked said data, said further data signal will correspond with (like for example being equal to) said data signal. Apart from this, said further data signal may further differ from said data signal in case inside said mobile terminal or between data provider and mobile terminal this data signal is amended without any user interaction (and for example due to standardised recommendations and/or irregularities). The direct transmission from mobile terminal 1 via switch 22 (but without intervention from receiving module 24 and transmitting module 23) to service provider 3 is advantageous in that access provider 2 is involved just once when generating said data.

Alternatively, in response to a user action (for example by using one or more keys), a confirmation signal is transmitted from transmitter 15 via interface 13 and base station 4 and switch 22 to receiving module 24 in access provider 2. Processor 20 is informed, and then controls transmitting module 23 in such a way that transmitting module 23 sends a further data signal to service provider 3. This allows said user to amend the data, in which case said further data signal will be different from said data signal, or just to check the data without amending it, in which case said further data signal will correspond with (like for example being equal to) said data signal. But for both cases the (further) data signal does not need to be sent from mobile terminal 1 to service provider 3, just either a confirmation signal or an amendment signal needs to be sent from mobile terminal 1 to access provider 2, the (further) data signal is sent from access provider 2 to service provider 3 usually via a public switched network having low-cost, high-speed connections, which is very advantageous.

Said service provider 3 and said access provider 2 comprise servers for storing form signals and data signals. This allows the access provider 2 to be more efficiently, due to access providers usually already possessing at least some of their mobile users' personal data.

According to a third possibility, said data signal stored in the access provider's server 21 is adaptable in response to a user action. Now said user has the option to adapt his/her personal data stored in the access provider's server 21. Thereto access provider 2 comprises an adjusting module 25 for making adjustments in the data stored in server 21. This adjustment module 25 can for example be remotely controlled by a user for example using a fixed terminal or a mobile terminal and visiting the access provider's web site, or is controlled by an access provider's employee after having received a letter, a fax, an email, a telephone call etc. from said user having used for example a fixed terminal or a mobile terminal.

By providing the telecommunication system according to the invention with a data provider (like for example but not exclusively an access provider) for providing data upon a user's request to for example the form provider (like fore example but not exclusively a service provider), the user no longer needs to enter said data him/herself. The form signal may be a signal representing (parts of) the form or may be a signal defining a standardised form.

The invention is based on the insight, inter alia, that the entering of data via mobile terminals is inconvenient, and is based upon the basic idea, inter alia, that this data could be offered as a service.

The invention solves the problem, inter alia, of providing a telecommunication system, which allows electronic forms to be filled in at least partly automatically by a trusted party. The electronic forms filled in are either sent back to said form provider, or to one or more other parties. When sent back to said form provider, at least the (further) data signal needs to be sent, possibly with at least a small part of said form signal, like for example a linking code (for linking data and form). When forwarded to one or more other parties, generally just the (further) data signal will not be sufficient to be sent, and will be accompanied by at least a larger part of said form signal, like for example the entire form signal or the codes described below.

Each possibility and each alternative can be combined with each other possibility and each other alternative. Each part of mobile terminal 1, access provider 2 and service provider 3, shown in the form of a block or not shown, can be 100% hardware, 100% software or a mixture of both. Each block shown or not shown can be integrated with each other block shown and/or not shown per mobile terminal, access provider and service provider, but also per combination of access provider and service provider. In addition to processors, memories and servers shown, each block can have a further processor and a further memory not shown for efficiency purposes. Interfaces 13 and 32 may be duplexers, splitters, switches etc. and may comprise buffers, converters etc.

The form signal may be a signal representing (parts of) the form for displaying (parts of) this form or may be a form code signal defining a standardised form and comprising one code defining the entire form or comprising several codes, each code for example defining one or more fields of the form. Said form signal for example further comprises an address code defining an address of the service provider and/or a destination code defining a destination of another party and/or an identification code defining the mobile terminal and/or its user.

The request signal for example comprises said identification code defining the mobile terminal and/or its user, and may further for example comprise said form code and/or said address code defining an address of the service provider and/or said destination code defining a destination of another party and/or an address code defining an address of said access provider.

The confirmation signal for example comprises said identification code defining the mobile terminal and/or its user, and may further for example comprise said form code and/or said address code defining an address of the service provider and/or said destination code defining a destination of another party and/or said address code defining an address of said access provider and/or an amendment code defining one ore more amendments.

The (further) data signal comprises data to be filled in into fields of the form, and may further comprise the signal representing (parts of) the form for displaying (parts of) this form or may comprise the form code signal defining a standardised form and comprising one code defining the entire form or comprising several codes, each code for example defining one or more fields of the form. Said (further) data signal further for example comprises said identification code defining the mobile terminal and/or its user, and may further for example comprise said address code defining an address of the service provider and/or said destination code defining a destination of another party and/or said address code defining an address of said access provider.

Of course, in mobile terminal 1, said codes will generally be added automatically to the signals, possibly in response to one or more user actions. In access provider 2 and service provider 3, said codes will generally be added automatically to the signals, as a result of the (mobile) connection between mobile terminal, access provider and service provider being already set up. In case of said access provider and said data provider not belonging to the same provider, the request signal to be sent to said data provider may involve another connection needing to be set up, possibly from access provider to data provider.

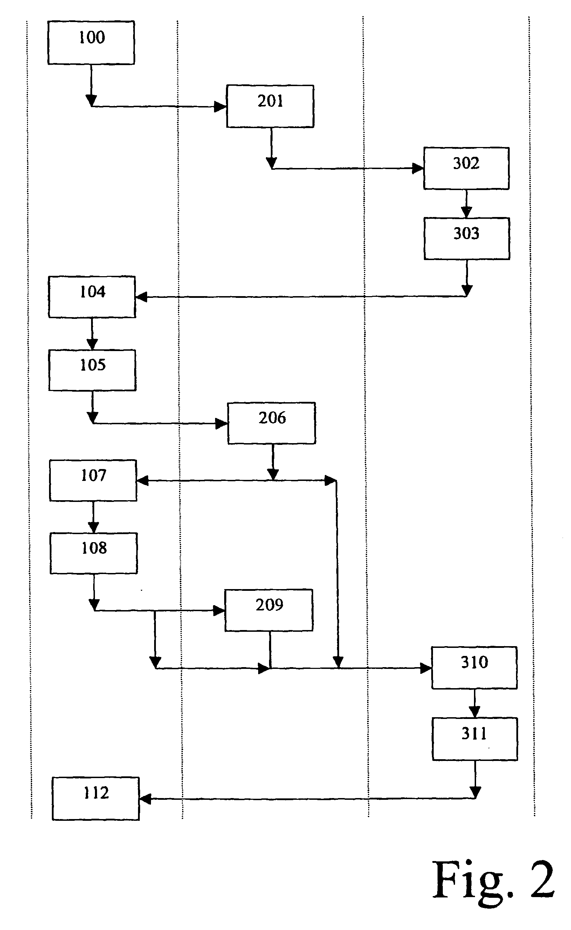

In the block diagram shown in figure 2 the blocks have the following meaning:
- Block 100: Mobile user's terminal generates an internet signal (comprising an access provider's address code like a telephone number) destined for an access provider for setting up an internet connection and then generates a service provider's address code (like for example a URL);
- Block 201: Access provider receives said internet signal and sets up an internet connection with said service provider;
- Block 302: Service provider is visited by the mobile terminal's user who shows interest in getting information and/or doing business with said service provider;
- Block 303: Service provider sends form signal to mobile user's terminal via the access provider;
- Block 104: Mobile user's terminal receives said form signal, which needs to be filled in with data;
- Block 105: Mobile user's terminal sends request signal to said access provider for automatic generation of said data;
- Block 206: Access provider receives said request signal and generates a data signal which either is sent to said mobile user's terminal or is sent to the service provider:

- Block 107: Mobile user's terminal receives said data signal and has the possibility of checking and/or amending the data;
- Block 108: Mobile user's terminal generates a confirmation signal possibly comprising an amendment signal which either together with said data signal is sent to the service provider or which possibly together with said data signal is sent to the access provider;
- Block 209: Access provider receives said confirmation signal possibly comprising said amendment signal possibly together with said data signal and sends said possibly amended data signal to the service provider;
- Block 310: Service provider receives said data signal comprising the data for filling in the electronic form;
- Block 311: Service provider sends a report signal to the mobile user's terminal for reporting the reception of the data;
- Block 112: Mobile user's terminal receives said report signal and now has the options of visiting other services of this service provider or visiting other service providers (possibly integrated with the access provider or via the access provider's portal etc.) or finishing the internet connection.

So, different features can be found in this invention, like for example
- the telecommunication system for mobile telecommunication and comprising mobile terminals (1) and providers (2,3),
- with at least one provider (3) being a form provider (3) for providing a form which at least partly needs to be filled in with data,
- the form provider (3) comprising a transmitting module (33) for transmitting a form signal to at least one mobile terminal (1),
- said telecommunication system comprising a data provider (2) for providing data,
- the data provider (2) comprising a receiving module (24) for receiving a request signal from said mobile terminal (1) and a transmitting module (23) for in response to said request signal transmitting a data signal,
- the mobile terminal (1) comprising a receiver (11) for receiving said form signal and a transmitter (15) for transmitting said request signal,
- said data provider (2) comprising said transmitting module (23) for transmitting said data signal to said mobile terminal (1),
- the mobile terminal (1) comprising said receiver (11) for receiving said data signal,
- said mobile terminal (1) comprising said transmitter (15) for in response to a user action transmitting a further data signal,
- said mobile terminal (1) comprising said transmitter (15) for in response to a user action transmitting a confirmation signal to said data provider (2),
- the data provider (2) comprising said receiving module (24) for receiving said confirmation signal and said transmitting module (23) for in response to said confirmation signal transmitting a further data signal,
- said form provider (3) and said data provider (2) each comprising a server (35,21) for storing form signals and data signals,
- with said form provider (3) being a service provider (3) and with said data provider (2) being an access provider (2),
- said data signal stored in an access provider's server (21) being adaptable in response to a user action.

In view of the above, it will be clear that further telecommunication systems, further data providers, further mobile terminals, further methods and/or further processor program products can be defined using one or more of the above-described features and/or using further features disclosed in the introduction and/or in the description of the drawings, without departing from the scope of this invention as defined by the claims.

## Claims

1. Telecommunication system for mobile telecommunication and comprising mobile terminals (1) and providers (2,3), with at least one provider (3) being a form provider (3) for providing a form which at least partly needs to be filled in with data, which form provider (3) comprises a transmitting module (33) for transmitting a form signal to at least one mobile terminal (1), which mobile terminal (1) comprises a receiver (11) for receiving said form signal, wherein said telecommunication system comprises a data provider (2) for providing data, **characterized in that** the data provider (2) comprises a receiving module (24) for receiving a request signal from said mobile terminal (1) and a transmitting module (23) for in response to said request signal transmitting a data signal directly to said form provider (3), the data signal comprising data to be filled in into the form, which mobile terminal (1) comprises a transmitter (15) for transmitting said request signal.

2. Telecommunication system according to claim 1, **characterized in that** said form provider (3) is a service provider (3) and said data provider (2) is an access provider (2).

3. Telecommunication system according to claim 2, **characterized in that** said data signal stored in an access provider's server (21) is adaptable in response to a user action.

4. Data provider (2) for use in a telecommunication system for mobile telecommunication and comprising mobile terminals (1) and providers (2,3), with at least one provider (3) being a form provider (3) for providing a form which at least partly needs to be filled in with data, **characterized in that** the data provider (2) comprises a receiving module (24) for receiving a request signal from a mobile terminal (1) and a transmitting module (23) for in response to said request signal transmitting a data signal directly to said form provider (3), the data signal comprising data to be filled in into the form.

5. Method for use in a telecommunication system for mobile telecommunication and comprising mobile terminals (1) and providers (2,3), with at least one provider (3) being a form provider (3) for providing a form which at least partly needs to be filled in with data, which form provider (3) comprises a transmitting module (33) for transmitting a form signal to at least one mobile terminal (1), which mobile terminal (1) comprises a receiver (11) for receiving said form signal, wherein said telecommunication system comprises a data provider (2) for providing data, **characterized in that** the method comprises the steps, at the data provider (2), of receiving a request signal from said mobile terminal (1) and of in response to said request signal transmitting a data signal directly to said form provider (3), the data signal comprising data to be filled in into the form, which mobile terminal (1) comprises a transmitter (15) for transmitting said request signal.

6. Processor program product to be run on a data provider's server (2) for use in a telecommunication system for mobile telecommunication and comprising mobile terminals (1) and providers (2,3), with at least one provider (3) being a form provider (3) for providing a form which at least partly needs to be filled in with data, **characterized in that** the processor program product comprises a receiving function for receiving a request signal from a mobile terminal (1) and a transmitting function for in response to said request signal transmitting a data signal directly to said form provider (3), the data signal comprising data to be filled in into the form.

## Patentansprüche

1. Telekommunikationssystem für die mobile Telekommunikation und umfassend mobile Endgeräte (1) und Anbieter (2, 3), wobei mindestens ein Anbieter (3) ein Formblattanbieter (3) ist, um ein Formblatt zu liefern, welches mindestens teilweise mit Daten zu füllen ist, welcher Formblattanbieter (3) ein Übertragungsmodul (33) umfasst, um ein Formblattsignal an mindestens ein mobiles Endgerät (1) zu übertragen, welches mobile Endgerät (1) einen Empfänger (11) umfasst, um das besagte Formblattsignal zu empfangen, wobei das besagte Telekommunikationssystem einen Datenanbieter (2) umfasst, um Daten zu liefern, **dadurch gekennzeichnet, dass** der Datenanbieter (2) ein Empfangsmodul (24), um ein Anforderungssignal von dem besagten mobilen Endgerät (1) zu empfangen, und ein Übertragungsmodul (23) umfasst, um in Antwort auf das besagte Anforderungssignal ein Datensignal direkt zu dem besagten Formblattanbieter (3) zu übertragen, wobei das Datensignal Daten umfasst, die in das Formblatt einzufüllen sind, welches mobile Endgerät (1) einen Übertrager (15) zur Übertragung des besagten Anforderungssignals umfasst.

2. Telekommunikationssystem nach Anspruch 1, **dadurch gekennzeichnet, dass** der besagte Formblattanbieter (3) ein Dienstanbieter (3) ist, und der besagte Datenanbieter (2) ein Zugangsanbieter (2) ist.

3. Telekommunikationssystem nach Anspruch 2, **dadurch gekennzeichnet, dass** das besagte Datensignal, das in einem Server (21) des Zugangsanbieters gespeichert ist, in Antwort auf eine Benutzer-Einwirkung anpassbar ist.

4. Datenanbieter für die Verwendung in einem Telekommunikationssystem für die mobile Telekommunikation und umfassend mobile Endgeräte (1) und Anbieter (2,3), mit mindestens einem Anbieter (3), der ein Formblattanbieter (3) ist, um ein Formblatt zu liefern, welches mindestens teilweise mit Daten zu füllen ist, **dadurch gekennzeichnet, dass** der Datenanbieter (2) ein Empfangsmodul (24), um ein Anforderungssignal von einem mobilen Endgerät (1) zu empfangen, und ein Übertragungsmodul (23) umfasst, um in Antwort auf das besagte Anforderungssignal ein Datensignal direkt zu dem besagten Formblattanbieter (3) zu übertragen, wobei das Datensignal in die besagte Form zu füllende Daten umfasst.

5. Verfahren zur Verwendung in einem Telekommunikationssystem für die mobile Telekommunikation und umfassend mobile Endgeräte (1) und Anbieter (2,3), mit mindestens einem Anbieter (3), der ein Formblattanbieter (3) ist, um ein Formblatt zu liefern, welches mindestens teilweise mit Daten zu füllen ist, welcher Formblattanbieter (3) ein Übertragungsmodul (33) umfasst, um ein Formblattsignal an mindestens ein mobiles Endgerät (1) zu übertragen, welches mobile Endgerät (1) einen Empfänger (11) umfasst, um das besagte Formblattsignal zu empfangen, wobei das besagte Telekommunikationssystem einen Datenanbieter (2) umfasst, um Daten zu liefern, **dadurch gekennzeichnet, dass** das Verfahren die Schritte umfasst, beim Datenanbieter (2), das Empfangen eines Anforderungssignal von dem besagten mobilen Endgerät (1), und, in Antwort auf das besagte Anforderungssignal, das Übertragen von einem Datensignal direkt zu dem besagten Formblattanbieter (3), wobei das Datensignal Daten umfasst, die in das Formblatt einzufüllen sind, welches mobile Endgerät (1) einen Übertrager (15) zur Übertragung des besagten Anforderungssignals umfasst.

6. Prozessorprogrammprodukt, um auf einem Server (2) eines Datenanbieters zu laufen, zur Verwendung in einem Telekommunikationssystem für die mobile Telekommunikation und umfassend mobile Endgeräte (1) und Anbieter (2,3), mit mindestens einem Anbieter (3), der ein Formblattanbieter (3) ist, um ein Formblatt zu liefern, welches mindestens teilweise mit Daten zu füllen ist, **dadurch gekennzeichnet, dass** Prozessorprogrammprodukt eine Empfangsfunktion, um ein Anforderungssignal von einem mobilen Endgerät (1) zu empfangen, und eine Übertragungsfunktion umfasst, um in Antwort auf das besagte Anforderungssignal, ein Datensignal direkt zu dem besagten Formblattanbieter (3) zu übertragen, wobei das Datensignal Daten umfasst, die in das Formblatt einzufüllen sind.

## Revendications

1. Système de télécommunication pour une télécommunication pour mobiles et comprenant des terminaux mobiles (1) et des fournisseurs (2, 3), au moins un fournisseur (3) étant un fournisseur de formulaire (3) destiné à fournir un formulaire qui a au moins en partie besoin d'être rempli avec des données, lequel fournisseur de formulaire (3) comprend un module d'émission (33) destiné à émettre un signal de formulaire vers au moins un terminal mobile (1), lequel terminal mobile (1) comprend un récepteur (11) destiné à recevoir ledit signal de formulaire, où ledit système de télécommunication comprend un fournisseur de données (2) destiné à fournir des données, **caractérisé en ce que** le fournisseur de données (2) comprend un module de réception (24) destiné à recevoir un signal de demande dudit terminal mobile (1) et un module d'émission (23) destiné à, en réponse audit signal de demande, émettre un signal de données directement audit fournisseur de formulaire (3), le signal de données comprenant des données devant être portées dans le formulaire, lequel terminal mobile (1) comprend un émetteur (15) destiné à émettre ledit signal de demande.

2. Système de télécommunication selon la revendication 1, **caractérisé en ce que** ledit fournisseur de formulaire (3) est un fournisseur de services (3) et ledit fournisseur de données (2) est un fournisseur d'accès (2).

3. Système de télécommunication selon la revendication 2, **caractérisé en ce que** ledit signal de données mémorisé dans un serveur du fournisseur d'accès (21) peut être adapté en réponse à l'action d'un utilisateur.

4. Fournisseur de données (2) destiné à une utilisation dans un système de télécommunication pour une télécommunication pour mobiles et comprenant des terminaux mobiles (1) et des fournisseurs (2, 3), au moins un fournisseur (3) étant un fournisseur de formulaire (3) destiné à fournir un formulaire qui a au moins en partie besoin d'être rempli avec des données, **caractérisé en ce que** le fournisseur de données (2) comprend un module de réception (24) destiné à recevoir un signal de demande d'un terminal mobile (1) et un module d'émission (23) destiné à, en réponse audit signal de demande, émettre un signal de données directement audit fournisseur de formulaire (3), le signal de données comprenant des données devant être portées dans le formulaire.

5. Procédé pour une utilisation dans un système de télécommunication pour une télécommunication pour mobiles et comprenant des terminaux mobiles (1) et des fournisseurs (2, 3), au moins un fournisseur (3) étant un fournisseur de formulaire (3) destiné à fournir un formulaire qui a au moins partiellement besoin d'être rempli avec des données, lequel fournisseur de formulaire (3) comprend un module d'émission (33) destiné à émettre un signal de formulaire vers au moins un terminal mobile (1), lequel terminal mobile (1) comprend un récepteur (11) destiné à recevoir ledit signal de formulaire, où ledit système de télécommunication comprend un fournisseur de données (2) destiné à fournir des données, **caractérisé en ce que** le procédé comprend, au niveau du fournisseur de données (2), les étapes consistant à recevoir un signal de demande provenant dudit terminal mobile (1) et consistant à, en réponse audit signal de demande, émettre un signal de données directement vers ledit fournisseur de formulaire (3), le signal de données comprenant des données devant être portées dans le formulaire, lequel terminal mobile (1) comprend un émetteur (15) destiné à émettre ledit signal de demande.

6. Produit de programme de processeur devant être exécuté sur un serveur d'un fournisseur de données (2) pour une utilisation dans un système de télécommunication pour une télécommunication pour mobiles et comprenant des terminaux mobiles (1) et des fournisseurs (2, 3), au moins un fournisseur (3) étant un fournisseur de formulaire (3) destiné à fournir un formulaire qui a au moins partiellement besoin d'être rempli avec des données, **caractérisé en ce que** le produit de programme de processeur comprend une fonction de réception destinée à recevoir un signal de demande d'un terminal mobile (1) et une fonction d'émission destinée à, en réponse audit signal de demande, émettre un signal de données directement audit fournisseur de formulaire (3), le signal de données comprenant des données devant être portées dans le formulaire.
